# EUROPÄISCHE PATENTSCHRIFT

(11) **EP 2 598 355 B1**
(45) Veröffentlichungstag und Bekanntmachung des Hinweises auf die Patenterteilung: **03.09.2014**
(21) Anmeldenummer: 11736282.2
(22) Anmeldetag: 19.07.2011
(51) Int. Cl.: B60H 1/34

(54) **LUFTAUSSTRÖMER**
AIR-DIFFUSER
EXPULSEUR D'AIR

(30) Priorität: 26.07.2010 DE 102010032233
(43) Veröffentlichungstag der Anmeldung: 05.06.2013
(73) Patentinhaber: TRW Automotive Electronics & Components GmbH, 78315 Radolfzell (DE); Audi AG, 85045 Ingolstadt (DE)
(72) Erfinder: KOBER, Steve, 08233 Treuen (DE); KÜSPERTH, Marco, 95676 Wiesau (DE)
(74) Vertreter: Prinz & Partner
(86) Internationale Anmeldenummer: PCT/EP2011/003613
(87) Internationale Veröffentlichungsnummer: WO 2012/013313

(56) Entgegenhaltungen:
- EP-A1- 2 181 874
- DE-A1- 2 538 235
- DE-U- 1 930 316
- GB-A- 1 403 323

## Beschreibung

Die Erfindung betrifft einen Luftausströmer mit einem Gehäuse und einer im Gehäuse verschwenkbaren Luftleiteinrichtung.

Luftausströmer sind in verschiedenen Ausgestaltungen aus dem Stand der Technik bekannt. Sie dienen allgemein dazu, das Volumen und die Richtung eines Luftstroms, der einem Fahrzeuginnenraum zur Klimatisierung zugeführt wird, in der gewünschten Weise einzustellen. Die Luftausströmer haben dazu eine Lagerung, die ein Verschwenken der Luftleiteinrichtung im Gehäuse ermöglicht. Gebräuchlich ist hierfür beispielsweise ein Kugelgelenk mit einer Lagerschale und einem in der Lagerschale gelagerten Kugelkopf. Die Bedienkräfte zum Verschwenken der Luftleiteinrichtung bzw. die Haltekräfte für die Luftleiteinrichtung können bei einem solchen Kugelgelenk über eine Klemmung des Kugelkopfes in der Lagerschale angepasst werden, d.h. über eine entsprechende Vorspannung der Lagerschale um den Kugelkopf wird der Reibungswiderstand zwischen Lagerschale und Kugelkopf angepasst. Aufgrund von Verschleiß und altersbedingtem Nachlassen der Elastizität der verwendeten Kunststoffe können die Haltekräfte eines solchen Kugelgelenks im Laufe der Zeit nachlassen. Das heißt, die Haltekräfte der Luftleiteinrichtung werden immer geringer, bis die Luftleiteinrichtung keinen ausreichenden Halt mehr im Gehäuse hat, um eine voreingestellte Richtung für den Luftstrom beizubehalten. Im Extremfall kann ein Spiel zwischen Lagerschale und Kugelkopf entstehen, dass zu unerwünschter Geräuschentwicklung im Fahrzeug führen kann.

Ein bekannter Luftausströmer ist aus EP2181874 A1, das den nächstliegenden Stand der Technik darstellt, offenbart.

Aufgabe der Erfindung ist es, einen Luftausströmer zu schaffen, der über die gesamte Lebensdauer gleichbleibend hohe Haltekräfte für die Luftleiteinrichtung gewährleistet.

Erfindungsgemäß ist dafür ein Luftausströmer mit einem Gehäuse und einer im Gehäuse verschwenkbaren Luftleiteinrichtung vorgesehen, wobei der Luftausströmer eine Lagerung aufweist, mit der die Luftleiteinrichtung um zumindest eine Schwenkachse verschwenkbar am Gehäuse gelagert ist. Die Lagerung ist durch ein Kugelgelenk mit einer Lagerschale und einem in der Lagerschale gelagerten Kugelkopf gebildet. Der Kugelkopf ist mehrteilig mit mindestens zwei Kugelabschnitten ausgebildet, und es ist ein Federelement vorgesehen, das die Kugelabschnitte des Kugelkopfes mit einer Kraft beaufschlagt, die die Kugelabschnitte auseinanderzudrücken sucht. Der Erfindung liegt die Überlegung zugrunde, die Reibung zwischen Lagerschale und Kugelkopf nicht durch ein Verspannen der Lagerschale auf dem Kugelkopf zu erzielen, sondern durch ein Auseinanderspreizen des Kugelkopfes zu bewirken. Der Kugelkopf ist zu diesem Zweck geteilt ausgeführt, und es ist ein Federelement vorgesehen, das die vorzugsweise zwei Kugelabschnitte auseinander und somit gegen die Lagerschale drückt. Die Federkraft des Federelements ist dabei so gewählt, dass auch bei verschleißbedingter Abnutzung oder nachlassender Elastizität der verwendeten Werkstoffe eine ausreichende Kraft auf die Kugelabschnitte ausgeübt wird, sodass diese gegen die Lagerschale gedrückt werden. Somit ist über die gesamte Nutzungsdauer des Luftausströmers eine spielfreie Lagerung der Luftleiteinrichtung im Gehäuse mit gleichbleibender Haltekraft gewährleistet. Über eine entsprechende Auswahl des Federelements ist zudem eine einfache Anpassung der Bedienkräfte zum Verstellen der Luftleiteinrichtung möglich.

In einer bevorzugten Ausführungsform ist der Kugelkopf am Gehäuse vorgesehen und die Lagerschale an der Luftleiteinrichtung. Die Luftleiteinrichtung kann also einfach ohne zusätzliche bewegliche Bauteile konstruiert werden, während der Kugelkopf mit der Feder im Gehäuse eingebaut ist. An der Luftleiteinrichtung und somit der Lagerschale sind keine konstruktiven Änderungen erforderlich, so dass die bisher verwendeten Luftleiteinrichtungen unverändert weiter verwendet werden können.

In dieser Ausführungsform ist beispielsweise ein erster Kugelabschnitt des Kugelkopfs drehfest mit dem Gehäuse verbunden und der zweite Kugelabschnitt in einer Richtung senkrecht zur Schnittebene der beiden Kugelabschnitte verschiebbar an der ersten Kugelhälfte gelagert. Der erste Kugelabschnitt bildet also ein Festlager, das auch die Position der Luftleiteinrichtung zum Gehäuse definiert. Der zweite Kugelabschnitt ist verschiebbar gegenüber dem ersten Kugelabschnitt gelagert, sodass dieser ein eventuell auftretendes Spiel im Kugelgelenk ausgleichen kann.

Zur Lagerung des zweiten Kugelabschnitts am ersten Kugelabschnitt ist beispielsweise an der dem zweiten Kugelabschnitt zugewandten Seite des ersten Kugelabschnitts eine mittige Aussparung vorgesehen, die sich vom zweiten Kugelabschnitt weg erstreckt. Der zweite Kugelabschnitt weist einen Vorsprung auf, der sich in die Aussparung erstreckt. Dadurch ist eine einfache Lagerung der beiden Kugelabschnitte geschaffen, die eine lineare Verschiebung beider Kugelabschnitte zueinander ermöglicht.

Das Federelement kann beispielsweise in der Aussparung angeordnet sein und den zweiten Kugelabschnitt mit einer vom ersten Kugelabschnitt weg gerichteten Kraft beaufschlagen. Das Federelement ist unverlierbar und geschützt vor Staub bzw. Verschmutzung in der Aussparung gehalten und wirkt konstant auf beide Kugelabschnitte.

Am ersten Kugelabschnitt kann ein Befestigungsvorsprung vorgesehen sein, um den Kugelkopf im Gehäuse zu befestigen. Um einen ausreichenden Platz für die Feder zu schaffen, beispielsweise für eine Spiralfeder, kann sich die Aussparung bis in den Befestigungsvorsprung erstrecken. Somit kann zum einen ausreichend Platz für eine Feder geschaffen werden. Zum anderen kann mit einem entsprechend langen Vorsprung des zweiten Kugelabschnitts die Lagerung der beiden Kugelabschnitte zueinander sicherer ausgebildet sein, so dass beispielsweise ein Verkanten des Vorsprungs in der Aussparung verhindert ist.

Um eine einfache Montage bzw. Demontage des Kugelgelenks zu ermöglichen, ist die Lagerschale vorzugsweise ringförmig ausgebildet und weist zwei ringförmige Lagerschalenbauteile auf. Die Lagerschalenbauteile werden getrennt hergestellt und um den Kugelkopf des Kugelgelenks zusammengesetzt.

Um eine spielfreie Lagerung des Kugelkopfes in der Lagerschale und somit eine spielfreie Lagerung der Luftleiteinrichtung zu ermöglichen, ist es vorgesehen, dass die Lagerschale eine Beschichtung aus einem weichen Material, insbesondere aus einem flexibel nachgiebigen Kunststoff aufweist. Ein solches Material hat einen höheren Reibungswiderstand als ein harter Kunststoff, sodass die Bedienkräfte des Luftausströmers besser eingestellt werden können. Zudem kann ein solches Material flexibel nachgeben, wodurch ein eventuelles Spiel besser ausgeglichen werden kann.

Die Beschichtung ist vorzugsweise an die jeweilige Lagerschale angespritzt, sodass diese gemeinsam mit der Lagerschale eine Einheit bildet.

Die Lagerschale ist vorzugsweise als separates Bauteil ausgebildet, sodass diese bei einem zu großen Verschleiß einzeln ausgetauscht werden kann.

Die erfindungsgemäße Lagerung mit einem Kugelgelenk ermöglicht ein Verschwenken in mehrere Richtungen. Um dies zu nutzen, kann die Luftleiteinrichtung beispielsweise eine allgemein kugelabschnittsförmige Außenfläche aufweisen und verschwenk- und verdrehbar im Gehäuse gelagert sein.

In dieser Ausführungsform entspricht der Mittelpunkt der Luftleiteinrichtung dem Drehpunkt des Kugellagers, sodass diese auf einer kugelförmigen Fläche um das Kugelgelenk verschwenkt werden kann. Dies ermöglicht, die kugelförmige Außenfläche der Luftleiteinrichtung unmittelbar zur Abdichtung im Gehäuse zu verwenden, da die Außenfläche konzentrisch mit dem Drehpunkt des Lagers ist.

Weitere Vorteile und Merkmale ergeben sich aus der nachfolgenden Beschreibung in Verbindung mit den beigefügten Zeichnungen. In diesen zeigen:
- Figur 1 eine perspektivische Schnittansicht eines erfindungsgemäßen Luftausströmers;
- Figur 2 eine Schnittansicht des Luftausströmers aus Figur 1;
- Figur 3 eine Detailansicht der Lagerung des Luftausströmers aus Figur 1;
- Figur 4 eine Detailansicht des Kugelgelenks des Luftausströmers aus Figur 1;
- Figur 5 eine Schnittansicht durch das Kugelgelenk aus Figur 5 in verschwenktem Zustand; und

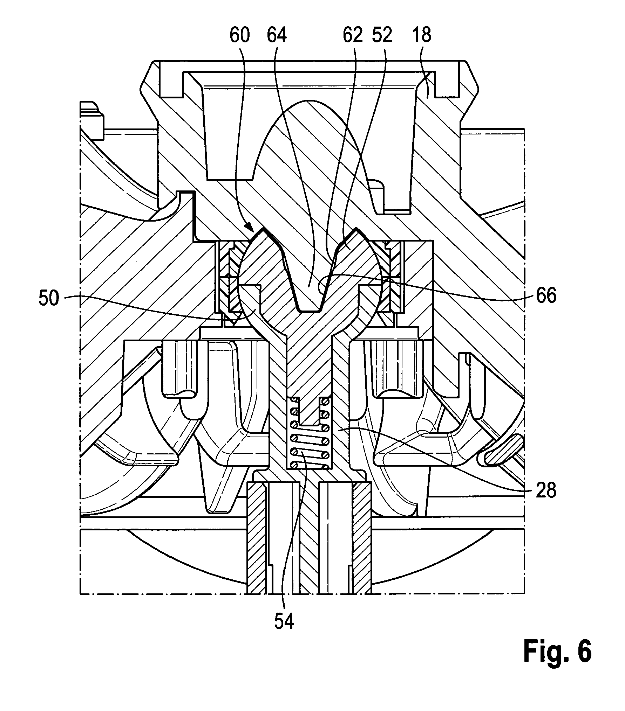

- Figur 6 eine Detailschnittansicht durch den Luftausströmer aus Figur 1.

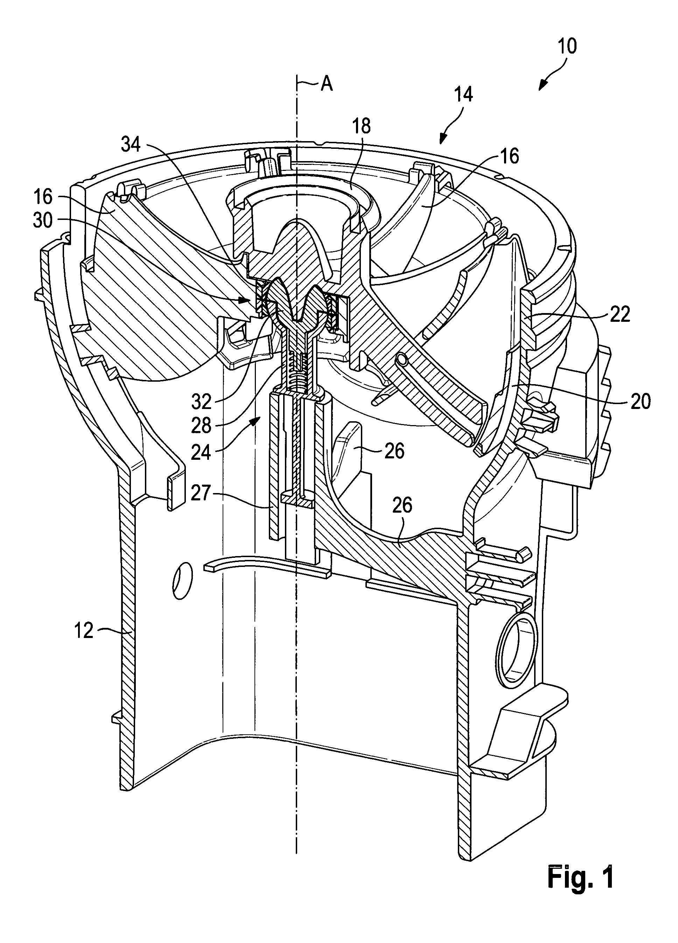

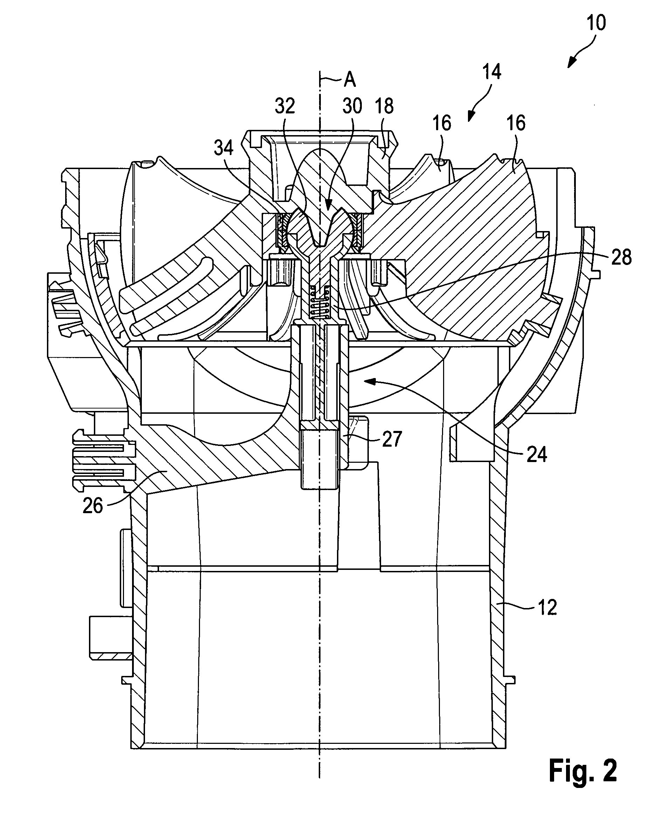

Der in den Figuren 1 und 2 gezeigte Luftausströmer 10 weist ein Gehäuse 12 auf, in dem eine Luftleiteinrichtung 14 schwenkbar relativ zu einer Längsachse A des Luftausströmers 10 gelagert ist. Die Luftleiteinrichtung 14 hat mehrere verstellbare Lamellen 16 sowie ein zentral angeordnetes Bedienelement 18. Die Verstellung der Lamellen 16 sowie die Funktionsweise des Bedienelements 18 sind aus dem Stand der Technik bekannt, sodass hierauf nicht näher eingegangen wird. Die Luftleiteinrichtung 14 hat eine im Wesentlichen kugelabschnittsförmige Außenfläche 20, die in einem im Wesentlichen halbkugelförmig ausgebildeten Abschnitt 22 des Gehäuses 12 angeordnet ist.

Die Luftleiteinrichtung 14 ist hier mit einer Lagerung 24 dreh- und schwenkbar im Gehäuse 12 des Luftausströmers 10 gelagert. Die Lagerung 24 weist mehrere Befestigungsarme 26 auf, an denen eine auf der Längsachse A angeordnete Aufnahme 27 vorgesehen ist, in die ein Befestigungsvorsprung 28 entgegen der Richtung der Längsachse A eingeschoben werden kann. Am Befestigungsvorsprung 28 ist ein Kugelgelenk 30 vorgesehen, dessen Drehpunkt im Mittelpunkt der Luftleiteinrichtung angeordnet ist.

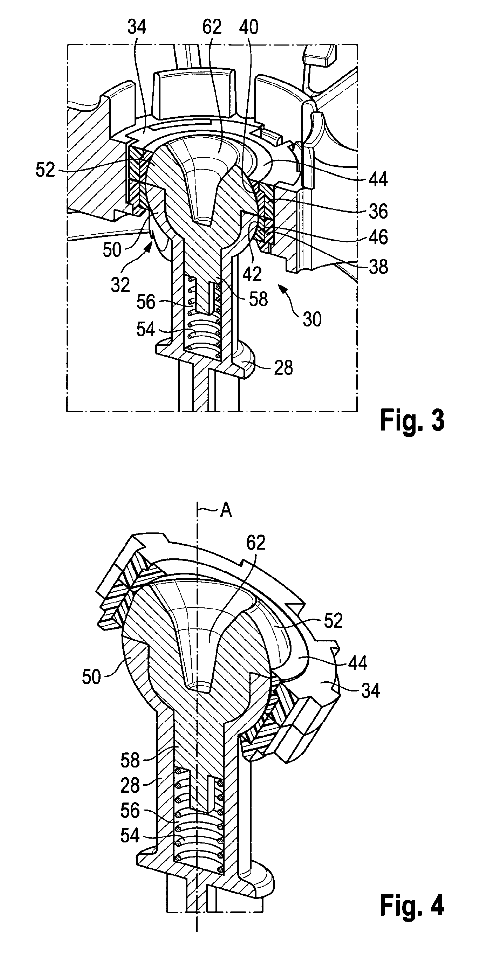

Wie insbesondere in Figur 3 zu sehen ist, hat das Kugelgelenk 30 einen am Befestigungsvorsprung 28 befestigten Kugelkopf 32 sowie eine mit der Luftleiteinrichtung 14 gekoppelte Lagerschale 34. Die Lagerschale 34 besteht aus zwei ringförmigen Lagerschalenbauteilen 36, 38, die mit einer Beschichtung 44,46 versehen sind. Die Beschichtungen 44,46 bestehen aus einem flexibel nachgiebigen Kunststoff, der beispielsweise an die Lagerschalenbauteile 36, 38 angespritzt ist. Die Beschichtungen weisen jeweils eine halbkugelabschnittsförmige Gleitfläche 40, 42 auf, die am Kugelkopf 32 anliegt. Es sind aber auch Ausführungsformen ohne eine Beschichtung 44, 46 denkbar. In diesem Fall wären die Gleitflächen 40, 42 direkt auf den Lagerschalenbauteilen 36, 38 vorgesehen.

Der Kugelkopf 32 weist zwei Kugelabschnitte 50, 52 auf, durch die der Kugelkopf 32 hier in einer Ebene senkrecht zur Längsachse A geteilt ist. Der bezüglich Figur 3 untere, erste Kugelabschnitt 50 ist fest mit dem Befestigungsvorsprung 28 verbunden, während der obere, zweite Kugelabschnitt 52, wie im Folgenden dargestellt wird, in Richtung der Längsachse A verschiebbar am ersten Kugelabschnitt 50 gelagert ist. Im gezeigten Ausführungsbeispiel ist der Kugelkopf entlang seines Äquators geteilt. Es ist grundsätzlich auch möglich, den Kugelabschnitt an einer anderen Stelle zu teilen. Beispielsweise kann eine Teilungslinie verwendet werden, die nach der Art von Burgzinnen verläuft, so dass die beiden Kugelabschnitte ineinandergreifen und aufeinander geführt sind. Es ist grundsätzlich auch möglich, mehr als zwei Kugelabschnitte zu verwenden.

Die Lagerung des zweiten Kugelabschnitts 52 am ersten Kugelabschnitt 50 erfolgt hier über eine Aussparung 56, die auf der dem zweiten Kugelabschnitt 52 zugewandten Seite des ersten Kugelabschnitt 50 vorgesehen ist und in die sich ein korrespondierender Vorsprung 58 des zweiten Kugelabschnitts 52 erstreckt. Die Aussparung 56 sowie der Vorsprung 58 erstrecken sich in Richtung der Längsachse A, so dass der zweite Kugelabschnitt 52 in Richtung der Längsachse A verschiebbar am ersten Kugelabschnitt 50 gelagert ist.

In der Aussparung 56 ist ein vorgespanntes Federelement 54, hier gebildet durch eine Spiralfeder, vorgesehen, das den Vorsprung 58 mit einer in Richtung der Längsachse A gerichteten Kraft beaufschlagt, so dass der erste Kugelabschnitt 50 und der zweite Kugelabschnitt 52 in Richtung der Längsachse A auseinanderdrückt werden. "Auseinandergedrückt" bedeutet, dass die Feder die beiden Kugelabschnitte so zu verschieben versucht, dass ihre Außenabmessungen, gemessen parallel zur Verschieberichtung, größer werden.

Der zweite Kugelabschnitt 52 wird durch das Federelement 54 in Richtung der Längsachse A gedrückt, bis dieser an der Gleitfläche 40 des ersten Lagerschalenbauteils 36 anliegt. Durch die Federkraft des Federelements 54 werden die Kugelabschnitte 52 und 50 weiter auseinandergedrückt, so dass der erste Kugelabschnitt 50 an der Gleitfläche 42 des zweiten Lagerschalenbauteils 38 anliegt. Der zweiteilige Kugelkopf 32 wird also in der Lagerschale 34 auseinander gespreizt, so dass der Kugelkopf mit beiden Kugelabschnitten 50, 52 an der Lagerschale 34 spielfrei anliegt und gegen diese gedrückt wird. Aufgrund der Reibungskräfte zwischen Kugelkopf 32 und Lagerschale 34 bzw. Gleitflächen 40, 42 wird die Luftleiteinrichtung 14 in ihrer jeweils eingestellten Position sicher gehalten.

Die Einstellung der Haltekräfte des Kugelgelenks 30 bzw. der Bedienkräfte zur Verstellung des Winkels der Luftleiteinrichtung 14 kann über eine entsprechende Auswahl der Federelements 54 erfolgen. Sind höhere Haltekräfte gewünscht, kann ein entsprechend härteres Federelement 54 eingesetzt werden.

Bei einem Verschleiß der Lagerschale 34 bzw. einer Abnutzung der Gleitflächen 40, 42 werden die Kugelabschnitte 50, 52 durch das Federelement 54 nachgeführt, also weiterhin konstant gegen die Gleitflächen 40, 42 der Lagerschale 34 gedrückt. Somit ist auch bei nutzungsbedingten Abnutzungen oder Verschleiß der Lagerschale 34 eine spielfreie Lagerung der Luftleiteinrichtung 14 am Kugelgelenk 30 gewährleistet. In der Praxis spielt sich diese Nachstellung im Bereich von Mikrometers oder allenfalls Zehntel Millimetern ab.

Die Aussparung 56 erstreckt sich hier durch den ersten Kugelabschnitt 50 bis in den Befestigungsvorsprung 28. Dadurch ist zum einen ausreichend Bauraum für das Federelement 54 geschaffen, zum anderen ist durch eine entsprechend längere Ausführung des Vorsprungs 58 des zweiten Kugelabschnitts 52 eine sichere Lagerung der Kugelabschnitte 50, 52 zueinander gewährleistet.

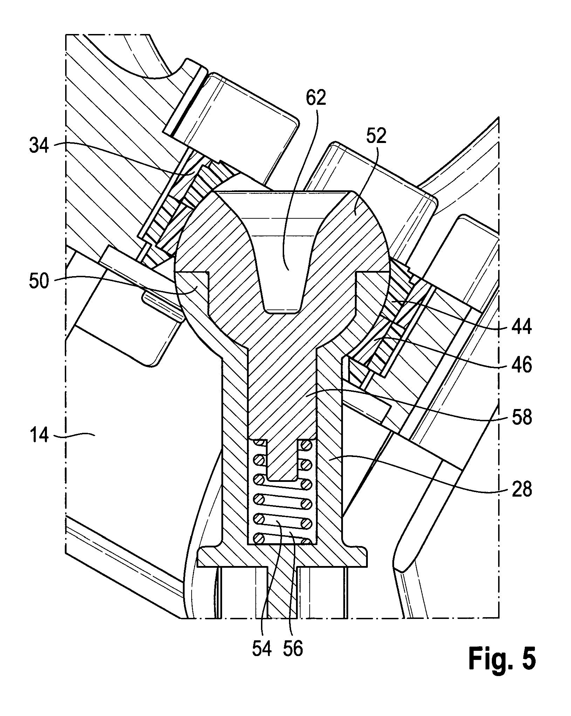

Wie in den Figuren 4 und 5 dargestellt ist, die das Kugelgelenk 30 in verschwenktem Zustand darstellen, ist auch bei vollständig verschwenktem Kugelgelenk stets sowohl ein Teil des ersten Kugelabschnitts 50 wie auch des zweiten Kugelabschnitts 52 in Anlage mit der Lagerschale 34. Das heißt, die spielfreie Lagerung ist unabhängig vom Verschwenkwinkel des Kugelgelenks 30, also der Luftleiteinrichtung 14, gewährleistet. Die Lagerschale 34 ist dabei so zu wählen, dass diese auch bei vollständig verschwenktem Kugelgelenk 30 einen ausreichenden Halt gewährleistet.

Wie in Figur 7 zu sehen ist, weist die Lagerung 24 des Weiteren einen Anschlag 60 auf, der der Schwenkwinkel des Kugelgelenks begrenzt. Ein zu weites Verschwenken des Kugelgelenks 30 könnte dazu führen, dass die Lagerschale 34 mit dem Befestigungsvorsprung 28 in Anlage kommt und es bei einem weiteren Verschwenken aufgrund der Hebelverhältnisse zu einer Beschädigung der Lagerschale 34 bzw. des Kugelkopfs 32 kommen kann.

Der Anschlag 60 ist hier durch eine kegelförmige Aussparung 62 gebildet, die am Kugelkopf 32 vorgesehen ist. In diese kegelförmige Aussparung 62 ragt ein Vorsprung 64, der hier mit dem Bedienelement 18 gekoppelt ist. Das mit der Luftleiteinrichtung 14 gekoppelte Bedienelement 18 kann soweit verschwenkt werden, bis der Vorsprung 64 an der Kegelfläche 66 der kegelförmigen Aussparung 62 anliegt. Die vorliegende Darstellung stellt dabei nur eine schematische Darstellung eines solchen Anschlags 60 dar. Die Kegelfläche 66 ist vorzugsweise so gewählt, dass diese ein Verschwenken des Kugelgelenks 30 um einen Winkel in der Größenordnung von maximal 30 Grad erlaubt.

Die Lagerschale 34 ist des Weiteren als separates Bauteil ausgebildet, das zur Montage gegen die Richtung der Längsachse A in die Luftleiteinrichtung 14 eingeschoben wird.

## Patentansprüche

1. Luftausströmer (10) mit einem Gehäuse (12) und einer im Gehäuse (12) verschwenkbaren Luftleiteinrichtung (14),
wobei der Luftausströmer (10) eine Lagerung (24) aufweist, mit der die Luftleiteinrichtung (14) um zumindest eine Schwenkachse verschwenkbar am Gehäuse (12) gelagert ist,
wobei die Lagerung (24) durch ein Kugelgelenk (30) mit einer Lagerschale (34) und einem in der Lagerschale (34) gelagerten Kugelkopf (32) gebildet ist, und
der Kugelkopf (32) mehrteilig mit mindestens zwei Kugelabschnitten (50, 52) ausgebildet ist und ein Federelement (54) vorgesehen ist,
**dadurch gekennzeichnet, dass** dieses Federelement (54) die Kugelabschnitte (50, 52) des Kugelkopfes (32) mit einer Kraft beaufschlagt, die die Kugelabschnitte (50, 52) auseinanderzudrücken sucht.

2. Luftausströmer nach Anspruch 1, **dadurch gekennzeichnet, dass** der Kugelkopf (32) am Gehäuse (12) vorgesehen ist und die Lagerschale (34) an der Luftleiteinrichtung (14) vorgesehen ist.

3. Luftausströmer nach Anspruch 2, **dadurch gekennzeichnet, dass** ein erster Kugelabschnitt (50) des Kugelkopfs (32) drehfest mit dem Gehäuse (12) verbunden ist und der zweite Kugelabschnitt (52) in einer Richtung senkrecht zur Schnittebene der beiden Kugelabschnitte (50, 52) verschiebbar am ersten Kugelabschnitt (50) gelagert ist.

4. Luftausströmer nach Anspruch 3, **dadurch gekennzeichnet, dass** an der dem zweiten Kugelabschnitt (52) zugewandten Seite des ersten Kugelabschnitts (50) eine mittige Aussparung (56) vorgesehen ist, die sich vom zweiten Kugelabschnitt (52) weg erstreckt, und der zweite Kugelabschnitt (52) einen Vorsprung (58) aufweist, der sich in die Aussparung (56) des ersten Kugelabschnitts (50) erstreckt.

5. Luftausströmer nach Anspruch 4, **dadurch gekennzeichnet, dass** das Federelement (54) in der Aussparung (56) angeordnet ist und den zweiten Kugelabschnitt (52) mit einer vom ersten Kugelabschnitt (50) weg gerichteten Kraft beaufschlagt.

6. Luftausströmer nach Anspruch 4 oder 5, **dadurch gekennzeichnet, dass** am ersten Kugelabschnitt (50) ein Befestigungsvorsprung (28) vorgesehen ist und sich die Aussparung (56) bis in den Befestigungsvorsprung (28) erstreckt.

7. Luftausströmer nach einem der vorhergehenden Ansprüche, **dadurch gekennzeichnet, dass** die Lagerschale (34) ringförmig ausgebildet ist und zwei ringförmige Lagerschalenbauteile (36, 38) aufweist.

8. Luftausströmer nach einem der vorhergehenden Ansprüche, **dadurch gekennzeichnet, dass** die Lagerschale (34) eine Beschichtung (44, 46) aus einem weichen Material, insbesondere aus einem flexibel nachgiebigen Kunststoff aufweist.

9. Luftausströmer nach Anspruch 8, **dadurch gekennzeichnet, dass** die Beschichtung (44, 46) an die Lagerschale (34) angespritzt ist.

10. Luftausströmer nach einem der vorhergehenden Ansprüche, **dadurch gekennzeichnet, dass** die Lagerschale (34) ein separates Bauteil ist.

11. Luftausströmer nach einem der vorhergehenden Ansprüche, **dadurch gekennzeichnet, dass** die Luftleiteinrichtung (14) eine allgemein kugelabschnittsförmige Außenfläche (20) aufweist und verschwenk- und verdrehbar im Gehäuse (12) gelagert ist.

12. Luftausströmer nach Anspruch 14, **dadurch gekennzeichnet, dass** der Mittelpunkt der Luftleiteinrichtung (14) dem Drehpunkt des Kugelgelenks (30) entspricht.

## Claims

1. An air vent (10) comprising a housing (12) and an air guiding means (14) that is swivel-mounted in the housing (12),
the air vent (10) including a mounting (24) by means of which the air guiding means (14) is mounted on the housing (12) for swiveling about at least one swivel axis,
the mounting (24) being formed by a ball joint (30) having a bearing shell (34) and a ball head (32) mounted in the bearing shell (34), and
the ball head (32) being of a multipart configuration with at least two spherical segments (50, 52), and a spring member (54) being provided, **characterized in that** this spring member (54) acts upon the spherical segments (50, 52) of the ball head (32) with a force that seeks to push the spherical segments (50, 52) apart.

2. The air vent according to claim 1, **characterized in that** the ball head (32) is provided on the housing (12) and the bearing shell (34) is provided on the air guiding means (14).

3. The air vent according to claim 2, **characterized in that** a first spherical segment (50) of the ball head (32) is connected so as to be non-rotatable relative to the housing (12), and the second spherical segment (52) is mounted on the first spherical segment (50) for displacement in a direction perpendicular to the cutting plane of the two spherical segments (50, 52).

4. The air vent according to claim 3, **characterized in that** a central recess (56) is provided on the side of the first spherical segment (50) facing the second spherical segment (52), the recess extending away from the second spherical segment (52), and that the second spherical segment (52) includes a projection (58) which extends into the recess (56) of the first spherical segment (50).

5. The air vent according to claim 4, **characterized in that** the spring member (54) is arranged in the recess (56) and acts upon the second spherical segment (52) with a force directed away from the first spherical segment (50).

6. The air vent according to claim 4 or 5, **characterized in that** a fastening projection (28) is provided on the first spherical segment (50) and the recess (56) extends as far as into the fastening projection (28).

7. The air vent according to any of the preceding claims, **characterized in that** the bearing shell (34) is of an annular design and includes two annular bearing shell components (36, 38).

8. The air vent according to any of the preceding claims, **characterized in that** the bearing shell (34) has a coating (44, 46) consisting of a soft material, in particular of a flexibly resilient plastic material.

9. The air vent according to claim 8, **characterized in that** the coating (44, 46) is injection-molded on the bearing shell (34).

10. The air vent according to any of the preceding claims, **characterized in that** the bearing shell (34) is a separate component.

11. The air vent according to any of the preceding claims, **characterized in that** the air guiding means (14) has a generally spherical segment-shaped outer surface (20) and is mounted in the housing (12) for swiveling and turning motion.

12. The air vent according to claim 14, **characterized in that** the center of the air guiding means (14) corresponds to the pivotal point of the ball joint (30).

## Revendications

1. Diffuseur d'air (10), comportant un boîtier (12) et un dispositif de guidage d'air (14) monté à pivotement dans le boîtier (12),
le diffuseur d'air (10) présentant un logement (24) au moyen duquel le dispositif de guidage d'air (14) est monté sur le boîtier (12) de manière à pouvoir pivoter autour d'au moins un axe de pivotement,
le logement (24) étant formé par un joint sphérique (30) présentant une coquille de coussinet (34) et une tête sphérique (32) montée dans la coquille de coussinet (34), et
la tête sphérique (32) étant réalisée en plusieurs pièces avec au moins deux tronçons sphériques (50, 52), et un élément ressort (54) étant prévu, **caractérisé en ce que** cet élément ressort (54) sollicite les tronçons sphériques (50, 52) de la tête sphérique (32) avec une force qui tente à écarter les tronçons sphériques (50, 52) les uns des autres.

2. Diffuseur d'air selon la revendication 1, **caractérisé en ce que** la tête sphérique (32) est prévue sur le boîtier (12) et la coquille de coussinet (34) est prévue sur le dispositif de guidage d'air (14).

3. Diffuseur d'air selon la revendication 2, **caractérisé en ce qu'**un premier tronçon sphérique (50) de la tête sphérique (32) est relié de manière solidaire en rotation au boîtier (12) et **en ce que** le deuxième tronçon sphérique (52) est monté sur le premier tronçon sphérique (50) de manière à être déplaçable dans un sens perpendiculaire au plan de coupe des deux tronçons sphériques (50, 52).

4. Diffuseur d'air selon la revendication 3, **caractérisé en ce que** sur la face du premier tronçon sphérique (50) tournée vers le deuxième tronçon sphérique (52), il est prévu un évidement central (56) qui s'étend en éloignement du deuxième tronçon sphérique (52), et **en ce que** le deuxième tronçon sphérique (52) présente une saillie (58) qui s'étend dans l'évidement (56) du premier tronçon sphérique (50).

5. Diffuseur d'air selon la revendication 4, **caractérisé en ce que** l'élément ressort (54) est agencé dans l'évidement (56) et sollicite le deuxième tronçon sphérique (52) avec une force orientée en éloignement du premier tronçon sphérique (50).

6. Diffuseur d'air selon la revendication 4 ou 5, **caractérisé en ce qu'**il est prévu une saillie de fixation (28) sur le premier tronçon sphérique (50) et **en ce que** l'évidement (56) s'étend jusque dans la saillie de fixation (28).

7. Diffuseur d'air selon l'une des revendications précédentes, **caractérisé en ce que** la coquille de coussinet (34) est réalisée de manière annulaire et présente deux composants (36, 38) de coquille de coussinet annulaires.

8. Diffuseur d'air selon l'une des revendications précédentes, **caractérisé en ce que** la coquille de coussinet (34) présente un revêtement (44, 46) en une matière souple, en particulier en une matière plastique élastique flexible.

9. Diffuseur d'air selon la revendication 8, **caractérisé en ce que** le revêtement (44, 46) est moulé par injection sur la coquille de coussinet (34).

10. Diffuseur d'air selon l'une des revendications précédentes, **caractérisé en ce que** la coquille de coussinet (34) est un composant séparé.

11. Diffuseur d'air selon l'une des revendications précédentes, **caractérisé en ce que** le dispositif de guidage d'air (14) présente une face extérieure (20) généralement en forme de segment sphérique et est monté à pivotement et de manière rotative dans le boîtier (12).

12. Diffuseur d'air selon la revendication 14, **caractérisé en ce que** le point central du dispositif de guidage d'air (14) correspond au centre de rotation du joint sphérique (30).
